# EUROPÄISCHE PATENTSCHRIFT

(11) **EP 3 670 745 B1**
(45) Veröffentlichungstag und Bekanntmachung des Hinweises auf die Patenterteilung: **29.09.2021**
(21) Anmeldenummer: 19214671.0
(22) Anmeldetag: 10.12.2019
(51) Int. Cl.: E01C 19/26

(54) **BODENBEARBEITUNGSMASCHINE**
SOIL PROCESSING MACHINE
MACHINE DE TRAITEMENT DU SOL

(30) Priorität: 17.12.2018 DE 102018132378
(43) Veröffentlichungstag der Anmeldung: 24.06.2020
(73) Patentinhaber: Hamm AG, 95643 Tirschenreuth (DE)
(72) Erfinder: Meier, Matthias, 95643 Tirschenreuth (DE); Prechtl, Christopher, 95685 Falkenberg (DE)
(74) Vertreter: Ruttensperger Lachnit Trossin Gomoll

(56) Entgegenhaltungen:
- EP-B1- 2 142 706
- JP-A- 2003 239 219

## Beschreibung

Die vorliegende Erfindung betrifft eine Bodenbearbeitungsmaschine, welche mittels einer bezüglich eines Maschinenrahmens drehbar getragenen Bodenbearbeitungswalze einen Boden bearbeiten, beispielsweise verdichten kann.

Aus der EP 2 142 706 B1 ist eine Bodenbearbeitungsmaschine gemäß dem Oberbegriff des Anspruchs 1 bekannt, welche einen Maschinenrahmen umfasst, der vermittels einer eine Deichseleinheit umfassenden Kopplungsanordnung an eine Zugmaschine angehängt werden kann und durch diese mit der auf dem Boden aufstehenden Verdichterwalze über den zu verdichtenden Boden gezogen werden kann. Eine bei dieser bekannten Bodenbearbeitungsmaschine vorgesehene Fahrwerksanordnung umfasst an jedem der beiden Längsträger des Maschinenrahmens ein daran drehbar getragenes Rad. Um in einem Überführungsbetriebszustand, in welchem vermitteltes der Verdichterwalze kein Boden verdichtet werden soll sondern die Bodenbearbeitungsmaschine zu dem zu verdichtenden Boden geschleppt werden soll, zu ermöglichen, dass die Bodenbearbeitungswalze nicht in Kontakt mit dem Boden ist und somit die Bodenbearbeitungsmaschine auf den an den Längsträgern drehbar getragenen Rädern rollen kann, ist ein Mechanismus vorgesehen, durch welchen die Bodenbearbeitungswalze bezüglich des Maschinenrahmens angehoben bzw. abgesenkt werden kann.

Es ist die Aufgabe der vorliegenden Erfindung, eine Bodenbearbeitungsmaschine vorzusehen, bei welcher in einfacher Art und Weise eine Bodenbearbeitungswalze an einem Maschinenrahmen angebracht und von diesem entkoppelt werden kann

Erfindungsgemäß wird diese Aufgabe gelöst durch eine Bodenbearbeitungsmaschine gemäß Anspruch 1, umfassend:
- einen Maschinenrahmen mit zwei quer zu einer Maschinen-Längsrichtung in Abstand zueinander angeordneten, sich im Wesentlichen in der Maschinen-Längsrichtung erstreckenden Längsträgern und zwei in der Maschinen-Längsrichtung in Abstand zueinander angeordneten, sich im Wesentlichen quer zur Maschinen-Längsrichtung erstreckenden Querträgern,
- eine in der Maschinen-Längsrichtung zwischen den Querträgern an den Längsträgern um eine Walzendrehachse drehbar getragene Bodenbearbeitungswalze,
- eine Kopplungsanordnung zur Ankopplung des Maschinenrahmens an einen weiteren Maschinenrahmen der Bodenbearbeitungsmaschine oder an eine weitere Maschine,
- eine an dem Maschinenrahmen vorgesehene Hub/Stütz-Anordnung zum Anheben oder/und Abstützen des Maschinenrahmens bezüglich eines Bodens,
wobei einer der Querträger an den beiden Längsträgern um eine zur Walzendrehachse im Wesentlichen parallele Schwenkachse schwenkbar getragen ist.

Bei der erfindungsgemäß aufgebauten Bodenbearbeitungsmaschine kann während des Austauschens einer Bodenbearbeitungswalze der Maschinenrahmen grundsätzlich durch die Hub/Stütz-Anordnung bezüglich eines Bodens abgestützt werden, so dass auch bei vom Maschinenrahmen entfernter Bodenbearbeitungswalze der Maschinenrahmen in einer definierten Position über dem Boden gehalten ist und insbesondere in einer zur Montage einer Bodenbearbeitungswalze geeigneten Positionierung ist. Das Entfernen bzw. Heranbewegen der Bodenbearbeitungswalze von dem bzw. an den Maschinenrahmen wird dadurch erleichtert bzw. ermöglicht, dass einer der Querträger an den grundsätzlich mit diesem gekoppelten Längsträgern verschwenkbar ist und somit in eine Position gebracht werden kann, welche die Bewegung der Verdichterwalze von dem Maschinenrahmen weg bzw. auf diesen zu insbesondere dann, wenn der Maschinenrahmen durch die Hub/Stütz-Anordnung bezüglich des Bodens abgestützt ist, nicht behindert.

Um in einfacher Weise den für die Montage bzw. Demontage einer Verdichterwalze erforderlichen Bewegungsraum zur Verfügung stellen zu können, wird vorgeschlagen, dass der eine der Querträger in einem in Höhenrichtung oberen Bereich desselben an den Längsträgern verschwenkbar getragen ist.

Da ein derartiger Querträger ein schweres, die erforderliche Stabilität gewährleistendes Bauteil ist, kann diesem ein den Querträger zur Verschwenkung um die Schwenkachse antreibender Schwenkantrieb zugeordnet sein. Ein Bewegen von Hand ist dann nicht erforderlich.

Beispielsweise kann die erforderliche Betätigungskraft in einfacher Weise erzeugt werden, wenn der Schwenkantrieb wenigstens eine, vorzugsweise in Zuordnung zu jedem Längsträger eine bezüglich des einen Querträgers und einem der Längsträger abgestützte Kolben/Zylinder-Einheit umfasst.

Der eine der Querträger kann durch den Schwenkantrieb zwischen einer Walzen-Betriebsstellung und einer Walzen-Montagestellung verschwenkbar sein, wobei in der Walzen-Betriebsstellung der eine der Querträger mit den Längsträgern fest und bezüglich diesen unbewegbar verbunden oder verbindbar ist und in der Walzen-Montagestellung bezüglich seiner Positionierung in der Walzen-Betriebsstellung in einer Höhenrichtung nach oben verschwenkt ist.

Um auch bei wirksamer Hub/Stütz-Anordnung und insbesondere bei vom Maschinenrahmen entfernter Bodenbearbeitungswalze ein Bewegen der Bodenbearbeitungsmaschine zu ermöglichen, wird vorgeschlagen, dass die Hub/Stütz-Anordnung eine Fahrwerksanordnung mit wenigstens einer an dem Maschinenrahmen höhenverstellbar getragenen Fahrwerkseinheit umfasst.

Dabei kann die Fahrwerksanordnung in Zuordnung zu jedem Längsträger eine an dem Längsträger höhenverstellbar getragene Fahrwerkseinheit umfassen. Insbesondere ist es dabei zum Ausgleichen von unebenem oder schrägem Boden vorteilhaft, wenn jede Fahrwerkseinheit unabhängig von der anderen Fahrwerkseinheit am zugeordneten Längsträger höhenverstellbar getragen ist.

Ein stabiler Aufbau kann beispielsweise dadurch erreicht werden, dass jede Fahrwerkseinheit in einem Ankopplungsbereich an den zugeordneten Längsträger schwenkbar angekoppelt ist und in einem bezüglich des Ankopplungsbereichs in der Maschinen-Längsrichtung in Abstand angeordneten Höhenverstellbereich bezüglich des zugeordneten Längsträgers über eine Höhenverstellanordnung höhenverstellbar abgestützt ist. Die Höhenverstellanordnung kann beispielsweise eine Kolben/Zylinder-Einheit oder eine Spindeleinheit umfassen.

Jede Fahrwerkseinheit kann einen in dem Ankopplungsbereich an den Längsträger schwenkbar angekoppelten und in dem Höhenverstellbereich mit der Höhenverstellanordnung gekoppelten Fahrwerksträger umfassen.

Um einen stabilen Aufstand der Bodenbearbeitungsmaschine auf dem Boden bzw. Boden vermittels der Hub/Stütz-Anordnung gewährleisten zu können, kann jede Fahrwerkseinheit einen in der Maschinen-Längsrichtung sich erstreckenden Bodenbearbeitungsmaschinen-Aufstandsflächenbereich aufweisen, und die Walzendrehachse kann in der Maschinen-Längsrichtung zwischen einem ersten Aufstandsflächenbereich-Längsende und einem zweiten Aufstandsflächenbereich-Längsende positioniert sein.

Für eine geringe Flächenlast wird vorgeschlagen, dass jede Fahrwerkseinheit ein Raupenfahrwerk umfasst. Dabei kann das Raupenfahrwerk an den Fahrwerksträger im Wesentlichen frei schwenkbar angekoppelt sein.

Bei Ausgestaltung der Bodenbearbeitungsmaschine als nicht selbstfahrende Maschine wird vorgeschlagen, dass die Bodenbearbeitungsmaschine zum Bewegen in der Maschinen-Längsrichtung vermittels der Kopplungsanordnung an eine Zugmaschine ankoppelbar ist. Dies schließt nicht aus, dass einer oder mehreren Fahrwerkseinheiten einer derartigen Bodenbearbeitungsmaschine ein Fahrwerksantrieb zugeordnet ist, der beispielsweise ein unterstützendes Antriebsmoment bereitstellen kann.

Für eine stabile Kopplung der Bodenbearbeitungsmaschine mit einer Zugmaschine kann die Kopplungsanordnung eine mit dem Maschinenrahmen vorzugsweise starr verbundene Deichseleinheit mit einer Kopplungsformation, vorzugsweise Kopplungspfanne, zur Ankopplung an eine an der Zugmaschine vorgesehene Gegen-Kopplungsformation, vorzugsweise Kopplungskugel, umfassen.

Bei Ausgestaltung der Bodenbearbeitungsmaschine als selbstfahrende Bodenbearbeitungsmaschine kann an dem einen Hinterwagen der Bodenbearbeitungsmaschine bereitstellenden weiteren Maschinenrahmen ein Antriebsaggregat vorgesehen sein, und die Kopplungsanordnung kann eine Lenk-Gelenksanordnung zur schwenkbaren Kopplung des einen Vorderwagen der Bodenbearbeitungsmaschine bereitstellenden Maschinenrahmens mit dem weiteren Maschinenrahmen um eine Lenk-Schwenkachse umfassen. Bei einer derartigen, allgemein auch als Walzenzug bezeichneten Bodenbearbeitungsmaschine können beispielsweise am Hinterwagen durch ein dort vorgesehenes Antriebsaggregat angetriebene Räder oder eine zur Drehung angetriebene weitere Bodenbearbeitungswalze vorgesehen sein. Auch ein Bedienstand für eine die Bodenbearbeitungsmaschine bedienende Bedienperson kann am Hinterwagen vorgesehen sein.

Die Erfindung betrifft ferner einen Bodenbearbeitungszug, umfassend eine Zugmaschine und eine an die Zugmaschine angekoppelte Bodenbearbeitungsmaschine, wie sie vorangehend als nicht selbstfahrende Bodenbearbeitungsmaschine beschrieben wurde.

Die Erfindung betrifft ferner ein Verfahren zur Demontage einer Bodenbearbeitungswalze von einer erfindungsgemäß aufgebauten Bodenbearbeitungsmaschine, umfassend die Maßnahmen:
a) Positionieren der Hub/Stütz-Anordnung derart, dass der Maschinenrahmen bei auf einem Boden aufstehender Bodenbearbeitungswalze durch die Hub/Stütz-Anordnung bezüglich des Bodens gestützt ist,
b) nach Durchführung der Maßnahme a), Loslösen der Bodenbearbeitungswalze von den Längsträgern;
c) vor oder nach Durchführung der Maßnahme b), Verschwenken des einen der Querträger in eine Walzen-Montagestellung,
d) nach Durchführung der Maßnahmen b) und c), Bewegen des Maschinenrahmens bezüglich der Bodenbearbeitungswalze im Wesentlichen in der Maschinenrahmen-Längsrichtung.

Um bei diesem Verfahren ein gegenseitiges Stören zwischen Maschinenrahmen und von diesem losgelöster Bodenbearbeitungswalze zu vermeiden, kann vor Durchführung der Maßnahme d) der Maschinenrahmen vermittels der Hub/Stütz-Anordnung derart angehoben werden, dass bei Durchführung der Maßnahme d) der Maschinenrahmen mit in die Walzen-Montagestellung verschwenktem Querträger über die Bodenbearbeitungswalze hinweg bewegbar ist.

Die vorliegende Erfindung wird nachfolgend mit Bezug auf die beiliegenden Figuren detailliert beschrieben. Es zeigt:
- Fig. 1: einen Bodenbearbeitungszug mit einer Bodenbearbeitungsmaschine und einer diese ziehenden Zugmaschine,
- Fig. 2: den Bodenbearbeitungszug der Fig. 1 mit in eine Walzen-Montagestellung verschwenktem Querträger;
- Fig. 3: den Bodenbearbeitungszug der Fig. 2 mit von einem Maschinenrahmen der Bodenbearbeitungsmaschine entfernter Bodenbearbeitungswalze;
- Fig. 4: eine selbstfahrende Bodenbearbeitungsmaschine.

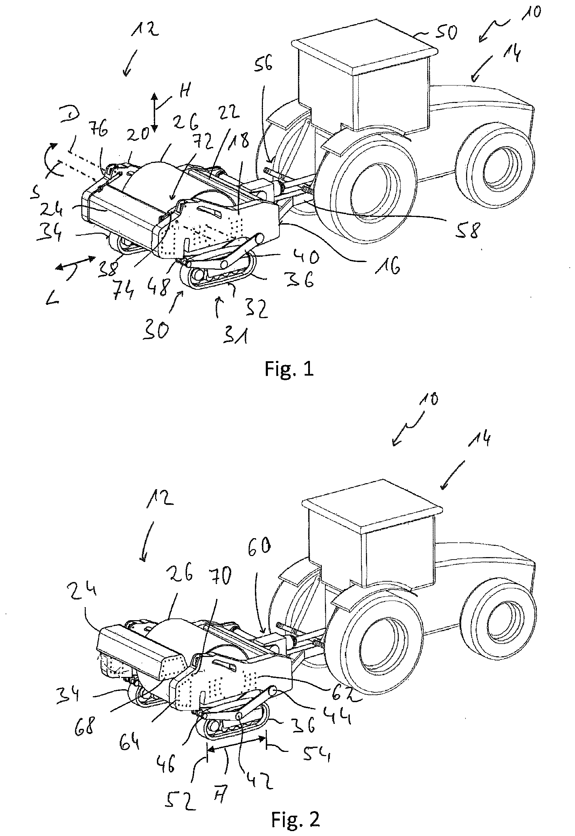

Die Fig. 1 zeigt einen allgemein mit 10 bezeichneten Bodenbearbeitungszug. Der Bodenbearbeitungszug 10 umfasst eine Bodenbearbeitungsmaschine 12 und eine die Bodenbearbeitungsmaschine 12 ziehende oder schiebende Zugmaschine 14.

Die als nicht selbstfahrende Maschine ausgebildete Bodenbearbeitungsmaschine 12 umfasst einen Maschinenrahmen 16 mit zwei quer zu einer Maschinenlängsrichtung L in Abstand zueinander angeordneten und in der Maschinen-Längsrichtung L sich erstreckenden Längsträgern 18, 20. An beiden Längsendbereichen sind die Längsträger 18, 20 mit Querträgern 22, 24 verbunden.

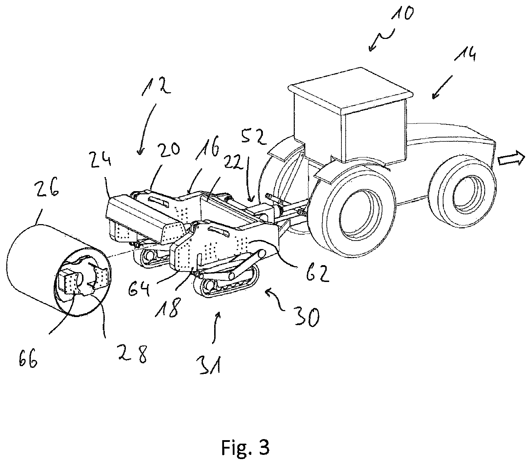

In dem von den Längsträgern 18, 20 und den Querträgern 22, 24 umgebenden Innenraum ist eine Bodenbearbeitungswalze 26 aufgenommen. Die Bodenbearbeitungswalze 26 ist an den Längsträgern 18, 20 um eine Walzendrehachse D drehbar getragen. Dazu sind an beiden in Richtung der Walzendrehachse D gelegenen Längsendbereichen der Bodenbearbeitungswalze 26 jeweilige in Fig. 3 erkennbare Trägereinheiten 28 vorgesehen, welche durch Verschraubung am jeweils zugeordneten Längsträger 18, 20 festgelegt werden können und die Bodenbearbeitungswalze 26 um die Walzendrehachse D drehbar getragen.

Die Bodenbearbeitungsmaschine 12 umfasst ferner eine allgemein mit 30 bezeichnete Fahrwerksanordnung. Die Fahrwerksanordnung 30 bildet im Wesentlichen eine Hub/Stütz-Anordnung 31 und umfasst in Zuordnung zu jedem der beiden Längsträger 18, 20 eine Fahrwerkseinheit 32, 34 jeweils mit einem Raupenfahrwerk 36, 38. Wie anhand der Fahrwerkseinheit 32 erkennbar, ist das jeweilige Raupenfahrwerk 36, 38 an einem Fahrwerksträger 40 in einem in der Maschinen-Längsrichtung L näherungsweise zentralen Kopplungsbereich 42 desselben um eine zur Walzendrehachse D im Wesentlichen parallele Achse schwenkbar getragen. In einem seiner beiden in der Maschinen-Längsrichtung L positionierten Endbereiche bildet der Fahrwerksträger 40 einen Ankopplungsbereich 44, in welchem der Fahrwerksträger 40 am zugeordneten Längsträger 18 bzw. 20 um eine zur Walzendrehachse D im Wesentlichen parallele Achse verschwenkbar getragen ist. In seinem anderen Endbereich bildet der jeweilige Fahrwerksträger 40 einen Höhenverstellbereich 46. In diesem Höhenverstellbereich 46 ist der Fahrwerksträger 40 bezüglich des jeweils zugeordneten Längsträgers 18, 20 über eine allgemein mit 48 bezeichnete Höhenverstellanordnung abgestützt. Die Höhenverstellanordnung 48 kann beispielsweise eine Kolben/Zylinder-Einheit umfassen, die am Höhenverstellbereich 46 des Fahrwerksträgers 40 einerseits und am zugeordneten Längsträger 16, 18 andererseits abgestützt ist. Durch Ein- bzw. Ausfahren der Kolben/Zylinder-Einheit kann die Höhenpositionierung des Höhenverstellbereichs 46 bezüglich des Maschinenrahmens 16 verändert werden und damit bei auf einem Boden aufstehender Fahrwerkseinheit 32, 34 die Höhe des Maschinenrahmens 16 über dem Boden eingestellt werden. Zur Ansteuerung der in Zuordnung zu den beiden Fahrwerkseinheiten 32, 34 vorgesehenen Höhenverstellanordnungen 48 können in einen Bedienstand 50 der Zugmaschine 14 Bedienelemente vorgesehen sein, die es einer Bedienperson ermöglichen, die Höhenlage der beiden Fahrwerkseinheiten 32, 34 voneinander unabhängig einzustellen. Bei Ausgestaltung der Höhenverstellanordnungen 48 jeweils mit einer Kolben/Zylinder-Einheit kann das dafür erforderliche Druckfluid durch Anschließen der Kolben/Zylinder-Einheiten an den Druckfluidkreislauf der Zugmaschine 14 bereitgestellt werden. Es ist darauf hinzuweisen, dass die Höhenverstellanordnungen 48 beispielsweise auch jeweils mit einer Spindeleinheit ausgebildet sein können. Eine derartige Spindeleinheit kann eine mit Außengewinde versehene Spindelstange und eine mit Innengewinde versehene und mit dem Außengewinde der Spindelstange in Eingriff stehende Spindelmutter umfassen. Der Spindelstange oder der Spindelmutter kann ein Antrieb zugeordnet sein, so dass durch Drehen der Spindelstange oder der Spindelmutter die Spindelmutter entlang der Spindelstange bewegt werden kann und auf diese Art und Weise die Höhenlage des Maschinenrahmens 16 bezüglich der Fahrwerksanordnung 30 eingestellt werden kann.

Es ist darauf hinzuweisen, dass die Fahrwerkseinheiten 32, 34 der Fahrwerksanordnung auch bei Ausgestaltung als jeweiliges Raupenfahrwerk 36, 38 selbst nicht angetrieben sein können, so dass die Bodenbearbeitungsmaschine 12 ausschließlich durch die Zugmaschine 14 bewegt wird. Alternativ ist es möglich, in Zuordnung zu den Fahrwerkseinheiten 32 diese jeweils antreibende Motoren, beispielsweise Druckfluidmotoren, vorzusehen, um eine unterstützende Antriebskraft bereitstellen zu können. Weiter ist in den Figuren zu erkennen, dass die Walzendrehachse D in der Maschinen-Längsrichtung näherungsweise über dem Kopplungsbereich 32 und im Bereich einer zwischen einem ersten Aufstandsflächenbereich-Längsende 52 und einem zweiten Aufstandsflächenbereich-Längsende 54 bereitgestellten Aufstandsfläche A des jeweiligen Raupenfahrwerks 36 bzw. 38 positioniert ist. Dies gewährleistet einen stabilen Stand bzw. eine gleichmäßige Lastverteilung auf den Boden.

Die Fahrwerkseinheiten 32, 34 können anstelle der Raupenfahrwerke beispielsweise auch mehrere hintereinander positionierte Räder umfassen. Bei derartiger Ausgestaltung ist der Aufstandsflächenbereich in der Maschinen-Längsrichtung im Wesentlichen definiert durch eine Gesamtfläche, welche zwischen den in der Maschinen-Längsrichtung L jeweils im vorderen und hinteren Endbereichen auf dem Boden stehenden Rädern bzw. deren Aufstandsflächen definiert ist.

Zur Kopplung der Bodenbearbeitungsmaschine 12 mit der Zugmaschine 14 ist beispielsweise am Querträger 22 eine allgemein mit 56 bezeichnete Kopplungsanordnung vorgesehen. Diese umfasst eine am Querträger 22 beispielsweise starr festgelegte Deichseleinheit 58. In dem in den Figuren nicht dargestellten Endbereich der Deichseleinheit 58 ist eine beispielsweise in Form einer Kopplungspfanne ausgebildete Kopplungsformation vorgesehen, die mit einer beispielsweise in Form einer Kopplungskugel ausgebildeten Gegen-Kopplungsformation an der Zugmaschine 14 in Kopplungseingriff gebracht werden kann. In dem an die Zugmaschine 14 angekoppelten Zustand kann über einen beispielsweise an eine Zapfwelle der Zugmaschine 14 angekoppelten Übertragungsmechanismus 60 ein Antriebsdrehmoment geliefert werden für einen im Inneren der Bodenbearbeitungswalze 26 angeordneten Schwingungsmechanismus. Dieser kann eine oder mehrere beispielsweise um die Walzendrehachse D zur Drehung antreibbar Unwuchtmassen umfassen, so dass im Bodenbearbeitungsbetrieb entsprechend der Drehzahl der Unwuchtmassen eine orthogonal zur Walzendrehachse D wirkende, vorzugsweise im Wesentlichen in einer Höhenrichtung H orientierte Kraft bzw. Beschleunigung auf die Bodenbearbeitungswalze 26 einwirkt.

Während bei der Bodenbearbeitungsmaschine 12 der auch die Kopplungsanordnung 56 tragende Querträger 22 mit den beiden Längsträgern 18, 20 beispielsweise durch Verschweißung starr und unlösbar verbunden sein kann, sind die Trägereinheiten 28 der Bodenbearbeitungswalze 26 und der Querträger 24 mit den Längsträgern 18, 20 lösbar verbunden. Hierzu sind in den Längsträgern 18, 20 in Zuordnung zu den Trägereinheiten 28 einerseits und in Zuordnung zum Querträger 24 andererseits jeweilige Gruppen von Durchgriffsöffnungen 62 bzw. 64 vorgesehen. Durch diese können Befestigungsschrauben hindurchgeführt und in diesen jeweils zugeordnete Gruppen von Gewindeöffnungen 66 an den Trägereinheiten 28 einerseits und 68 am Querträger 24 andererseits eingeschraubt werden. Somit kann durch eine Vielzahl von Schraubbolzen eine feste Anbindung der Trägereinheiten 28 und des Querträgers 24 an die Längsträger 18, 20 gewährleistet werden. Insbesondere in Zuordnung zu den Trägereinheiten 28 kann auch vorgesehen sein, dass die Schraubbolzen durch in diesen vorgesehene Öffnungen hindurchgeführt und zur Herstellung einer festen Verbindung mit auf diese aufgeschraubte Muttern verbunden werden.

Der Querträger 24 ist zusätzlich zu dieser durch Schraubbolzen herstellbaren Verbindung mit den Längsträgern 18, 20 an diesen um eine zur Walzendrehachse D beispielsweise im Wesentlichen parallele Schwenkachse S schwenkbar getragen. Auch hierzu können beispielsweise die Längsträger 18, 20 durchsetzende und in den Querträger 24 eingeschraubte Schraubbolzen oder sonstige nichtlösbare Schwenkbolzen genutzt werden. Die Schwenkachse S ist in der Höhenrichtung H im oberen Bereich des Querträgers 24 bzw. auch der Längsträger 18, 20 positioniert. Zum Verschwenken des Querträgers 24 aus der in Fig. 1 dargestellten Walzen-Betriebsstellung, in welcher der Querträger 24 in der vorangehend beschriebenen Art und Weise mit den Längsträgern 18, 20 beispielsweise durch Verschraubung fest verbunden sein kann, zu der in Fig. 2 dargestellten Walzen-Montagestellung, in welcher der Querträger 24 in der Höhenrichtung H nach oben verschwenkt ist, ist dem Querträger 24 ein allgemein mit 72 bezeichneter Schwenkantrieb zugeordnet.

Dieser umfasst im dargestellten Beispiel zwei Kolben/Zylinder-Einheiten 74, 76, die an den Längsträgern 18, 20 einerseits und den quer zur Maschinen-Längsrichtung positionierten Endbereichen des Querträgers 24 andererseits angreifen. Durch Zufuhr bzw. Abfuhr von Druckfluid zu bzw. aus den Kolben/Zylinder-Einheiten 74, 76 können diese aus- bzw. eingefahren werden, so dass der Querträger 24 zwischen den beiden in Fig. 1 und 2 dargestellten Stellungen verstellbar ist. Auch die Zufuhr/Abfuhr von Druckfluid zu bzw. von den Kolben/Zylinder-Einheiten 74, 76 kann über entsprechende Bedienelemente im Bedienstand 50 erfolgen. Das dazu erforderliche Druckfluid kann aus dem Druckfluidkreislauf der Zugmaschine 14 abgegriffen werden.

Im Betrieb des Bodenbearbeitungszugs 10 kann dann, wenn die Bodenbearbeitungsmaschine 12 zu einem zu bearbeitenden Boden transportiert werden soll, die Fahrwerksanordnung 30 so angesteuert werden, dass die beiden Fahrwerkseinheiten 32, 34 bezüglich des Maschinenrahmens 16 nach unten verschwenkt werden bzw. der Maschinenrahmen 16 angehoben wird, so dass mit diesem auch die Bodenbearbeitungswalze 16 angehoben wird und nicht in Kontakt mit dem Boden ist. Erst dann, wenn der zu bearbeitende Boden erreicht ist, kann der Maschinenrahmen 16 abgesenkt werden, so dass die Bodenbearbeitungswalze 26 in Kontakt mit dem zu bearbeitenden Boden kommt und alleine oder ggf. mit Unterstützung durch die Fahrwerkseinheiten 32, 34 die im Wesentlichen durch das Gewicht der gesamten Bodenbearbeitungsmaschine 12 bereitgestellte Last trägt bzw. in den Boden einleitet. In diesem Zustand kann die Bodenbearbeitungswalze 26 dann, wenn sie mit im Wesentlichen glatter Außenumfangsfläche ausgebildet ist, beispielsweise zum Verdichten des Bodens genutzt werden. Ist die Bodenbearbeitungswalze 26 beispielsweise mit strukturierter Außenumfangskontur ausgebildet, kann sie auch zum Zerbrechen eines festen Untergrunds genutzt werden.

Um die Bodenbearbeitungsmaschine 12 an verschiedene Arbeitsanforderungen anzupassen, kann es erforderlich sein, die Bodenbearbeitungswalze 26 auszutauschen. Auch für Reparaturarbeiten kann es erforderlich sein, die Bodenbearbeitungswalze 26 vom Maschinenrahmen 16 zu entfernen. Dies kann bei der in den Figuren dargestellten Bodenbearbeitungsmaschine 12 dadurch erfolgen, dass die beiden Fahrwerkseinheiten 32, 34 so weit abgesenkt werden, dass die Bodenbearbeitungsmaschine 12 einerseits mit den Fahrwerkseinheiten 32, 34, andererseits mit der Bodenbearbeitungswalze 26 auf dem Boden aufsteht. Bereits vor oder nach dem Positionieren der Fahrwerkseinheiten 32, 34 in diesem Zustand kann der Querträger 24 in die in Fig. 2 dargestellte Walzen-Montagestellung verschwenkt werden. Vor oder nach dem Verschwenken des Querträgers 24 in die Walzen-Montagestellung können die die Trägereinheiten 28 an die Längsträger 18, 20 anbindenden Schraubbolzen entfernt werden, so dass grundsätzlich die auf dem Boden aufstehende Bodenbearbeitungswalze 26 vom Maschinenrahmen 16 gelöst ist. Selbstverständlich sind dabei auch etwaige mechanische oder mit Druckfluid wirkende Antriebsverbindungen, welche beispielsweise zum Antreiben des Schwingungsmechanismus in die Bodenbearbeitungswalze 26 geführt sind, zu lösen. Nachfolgend kann dann der Maschinenrahmen 16 durch entsprechende Ansteuerung der Fahrwerkseinheiten 32, 34 bzw. der Höhenverstellanordnungen 48 derselben angehoben werden, so dass der bereits in seine Walzen-Montagestellung verschwenkte Querträger 24 in der Höhenrichtung H vollständig über der Bodenbearbeitungswalze 26 positioniert ist. Gegebenenfalls kann das Verschwenken des Querträgers 24 in die Walzen-Montagestellung auch erst dann erfolgen, wenn nach dem Lösen der Bodenbearbeitungswalze 26 vom Maschinenrahmen 16 dieser durch entsprechende Ansteuerung de Höhenverstellanordnungen 48 angehoben wurde.

Nachfolgend kann durch Bewegen des Maschinenrahmens 16 im Wesentlichen in der Maschinen-Längsrichtung L dieser mit dem in die Walzen-Montagestellung verschwenkten Querträger 24 über die auf dem Boden aufstehende Bodenbearbeitungswalze 26 hinweg bewegt werden, so dass, wie die Fig. 3 dies veranschaulicht, die Bodenbearbeitungswalze 26 frei liegt und beispielsweise für Reparatur- oder Wartungsarbeiten zugänglich ist oder der Maschinenrahmen 16 mit einer anderen Bodenbearbeitungswalze gekoppelt werden kann.

Zum Koppeln einer Bodenbearbeitungswalze 26 mit dem Maschinenrahmen 16 können die vorangehend angeführten Arbeitsschritte in umgekehrter Reihenfolge durchgeführt werden. Das heißt, es wird zunächst der Maschinenrahmen 16 mit in die Walzen-Montagestellung verschwenktem Querträger 24 über die Bodenbearbeitungswalze 26 hinweg bewegt. Bevor oder nachdem der Querträger 24 in seine in Fig. 1 dargestellte Walzen-Betriebsstellung verschwenkt wird, kann der Montagerahmen 16 abgesenkt werden, so dass die Trägereinheiten 28 an die beiden Längsträger 18, 20 angebunden werden können und auch die mechanische oder hydraulische Ankopplung der Bodenbearbeitungswalze 26 an ein entsprechendes Antriebssystem der Bodenbearbeitungsmaschine 12 bzw. der Zugmaschine 14 erfolgen kann. Nachfolgend ist die Bodenbearbeitungsmaschine 12 dann wieder für die Durchführung von Bodenbearbeitungsvorgängen bereit.

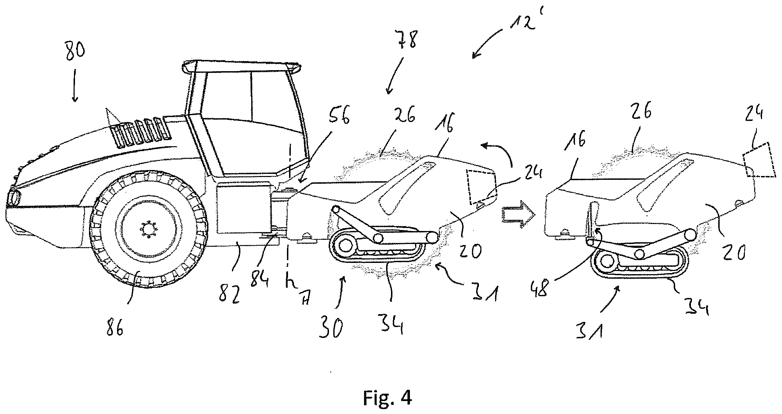

Eine alternative Ausgestaltung einer Bodenbearbeitungsmaschine 12' ist in Fig. 4 dargestellt. In dieser Ausgestaltung ist die Bodenbearbeitungsmaschine 12 als selbstfahrende Bodenbearbeitungsmaschine ausgebildet. Der Maschinenrahmen 16 bildet den oder einen Teil eines Vorderwagens 78. Ein Hinterwagen 80 stellt einen weiteren Maschinenrahmen 82 bereit, welcher mit dem Maschinenrahmen 16 bzw. dem Vorderwagen 78 über eine Lenk-Gelenksanordnung 84 um eine Lenkachse A schwenkbar gekoppelt ist. Die Lenk-Gelenksanordnung 84 stellt im Wesentlichen die Kopplungsanordnung 56 bereit, mit welcher der die Bodenbearbeitungswalze 26 tragende Maschinenrahmen 16 an den weiteren Maschinenrahmen 82 angekoppelt ist.

Am Hinterwagen 80 ist ein Antriebsaggregat vorgesehen, durch welches einerseits die für den Betrieb der Bodenbearbeitungsmaschine 12' erforderliche Energie geliefert wird und insbesondere auch am Hinterwagen 80 vorgesehene Antriebsräder 86 zum Voranbewegen der Bodenbearbeitungsmaschine 12' angetrieben werden können. Anstelle der beidseits am Hinterwagen 80 vorgesehenen Antriebsräder 86 kann an diesem alternativ auch eine weitere durch das Antriebsaggregat zur Drehung antreibbare Bodenbearbeitungswalze vorgesehen sein.

In Zuordnung zum Vorderwagen 78 bzw. zum Maschinenrahmen 16 ist die Fahrwerksanordnung 30 mit ihren beiden Fahrwerkseinheiten vorgesehen, von welchen in Fig. 4 die in Zuordnung zum Längsträger 20 vorgesehene Fahrwerkseinheit 34 erkennbar ist.

Erkennbar ist auch der in dieser Darstellung grundsätzlich verdeckte Querträger 24 der in seiner Walzen-Betriebsstellung ist. Zum Demontieren und Montieren der Bodenbearbeitungswalze 26 kann, so wie vorangehend beschrieben, zunächst der Vorderwagen 18 mit der Bodenbearbeitungswalze 16 und der Fahrwerksanordnung 30 auf dem Boden aufgesetzt werden. Nach Lösen der Bodenbearbeitungswalze 26 von den Längsträgern kann, wie dies in Fig. 4 rechts in einer Übergangsphase angedeutet ist, der Maschinenrahmen 16 angehoben werden. Vor oder nach dem Loslösen der Bodenbearbeitungswalze 26 vom Maschinenrahmen 16 oder dem Anheben des Maschinenrahmens 16 kann der Querträger 24 in seine Walzen-Montagestellung verschwenkt werden. Nachfolgend kann die Bodenbearbeitungsmaschine 12 mit Vorderwagen 78 und Hinterwagen 80 in der Darstellung der Fig. 4 nach links, also rückwärts bewegt werden, um den Maschinenrahmen 16 von der Bodenbearbeitungswalze 26 weg zu bewegen.

## Patentansprüche

1. Bodenbearbeitungsmaschine, umfassend:
- einen Maschinenrahmen (16) mit zwei quer zu einer Maschinen-Längsrichtung (L) in Abstand zueinander angeordneten, sich im Wesentlichen in der Maschinen-Längsrichtung (L) erstreckenden Längsträgern (18, 20) und zwei in der Maschinen-Längsrichtung (L) in Abstand zueinander angeordneten, sich im Wesentlichen quer zur Maschinen-Längsrichtung (L) erstreckenden Querträgern (22, 24),
- eine in der Maschinen-Längsrichtung (L) zwischen den Querträgern (22, 24) an den Längsträgern (18, 20) um eine Walzendrehachse (D) drehbar getragene Bodenbearbeitungswalze (26),
- eine Kopplungsanordnung (56) zur Ankopplung des Maschinenrahmens (16) an einen weiteren Maschinenrahmen (82) der Bodenbearbeitungsmaschine (12') oder an eine weitere Maschine (14),
- eine an dem Maschinenrahmen (16) vorgesehene Hub/Stütz-Anordnung (31) zum Anheben oder/und Abstützen des Maschinenrahmens (16) bezüglich eines Bodens,
**dadurch gekennzeichnet, dass** einer der Querträger (22, 24) an den beiden Längsträgern (18, 20) um eine zur Walzendrehachse (D) im Wesentlichen parallele Schwenkachse (S) in eine eine Bewegung der Bodenbearbeitungswalze (26) bei durch die Hub/Stütz-Anordnung (31) bezüglich des Bodens abgestütztem Maschinenrahmen (16) von dem Maschinenrahmen (16) weg und auf den Maschinenrahmen (16) zu nicht behindernde Position schwenkbar getragen ist.

2. Bodenbearbeitungsmaschine nach Anspruch 1,
**dadurch gekennzeichnet, dass** der eine der Querträger (22, 24) in einem in Höhenrichtung (H) oberen Bereich desselben an den Längsträgern (18, 20) verschwenkbar getragen ist.

3. Bodenbearbeitungsmaschine nach Anspruch 1 oder 2,
**dadurch gekennzeichnet, dass** dem einen der Querträger (22, 24) ein diesen zur Verschwenkung um die Schwenkachse (S) antreibender Schwenkantrieb (72) zugeordnet ist.

4. Bodenbearbeitungsmaschine nach Anspruch 3,
**dadurch gekennzeichnet, dass** der Schwenkantrieb (72) wenigstens eine, vorzugsweise in Zuordnung zu jedem Längsträger (18, 20) eine, bezüglich des einen Querträgers (24) und einem der Längsträger (18, 20) abgestützte Kolben/Zylinder-Einheit (74, 76) umfasst.

5. Bodenbearbeitungsmaschine nach Anspruch 3 oder 4,
**dadurch gekennzeichnet, dass** der eine der Querträger (22, 24) durch den Schwenkantrieb (72) zwischen einer Walzen-Betriebsstellung und einer Walzen-Montagestellung verschwenkbar ist, wobei in der Walzen-Betriebsstellung der eine der Querträger (22, 24) mit den Längsträgern (18, 20) fest und bezüglich diesen unbewegbar verbunden oder verbindbar ist und in der Walzen-Montagestellung bezüglich seiner Positionierung in der Walzen-Betriebsstellung in einer Höhenrichtung (H) nach oben verschwenkt ist.

6. Bodenbearbeitungsmaschine nach einem der vorangehenden Ansprüche,
**dadurch gekennzeichnet, dass** die Hub/Stütz-Anordnung (31) eine Fahrwerksanordnung (30) mit wenigstens einer an dem Maschinenrahmen (16) höhenverstellbar getragenen Fahrwerkseinheit (32, 34) umfasst.

7. Bodenbearbeitungsmaschine nach Anspruch 6,
**dadurch gekennzeichnet, dass** die Fahrwerksanordnung (30) in Zuordnung zu jedem Längsträger (18, 20) eine an dem Längsträger (18, 20) höhenverstellbar getragene Fahrwerkseinheit (32, 34) umfasst, vorzugsweise wobei jede Fahrwerkseinheit (32, 34) unabhängig von der anderen Fahrwerkseinheit (32, 34) am zugeordneten Längsträger (18, 20) höhenverstellbar getragen ist.

8. Bodenbearbeitungsmaschine nach Anspruch 7,
**dadurch gekennzeichnet, dass** jede Fahrwerkseinheit (32, 34) in einem Ankopplungsbereich (44) an den zugeordneten Längsträger (18, 20) schwenkbar angekoppelt ist und in einem bezüglich des Ankopplungsbereichs (44) in der Maschinen-Längsrichtung (L) in Abstand angeordneten Höhenverstellbereich (46) bezüglich des zugeordneten Längsträgers (18, 20) über eine Höhenverstellanordnung (48) höhenverstellbar abgestützt ist.

9. Bodenbearbeitungsmaschine nach Anspruch 8,
**dadurch gekennzeichnet, dass** die Höhenverstellanordnung (48) eine Kolben/Zylinder-Einheit oder eine Spindeleinheit umfasst.

10. Bodenbearbeitungsmaschine nach Anspruch 8 oder 9,
**dadurch gekennzeichnet, dass** jede Fahrwerkseinheit (32, 34) einen in dem Ankopplungsbereich (44) an den Längsträger (18, 20) schwenkbar angekoppelten und in dem Höhenverstellbereich (46) mit der Höhenverstellanordnung (48) gekoppelten Fahrwerksträger (40) umfasst.

11. Bodenbearbeitungsmaschine nach einem der Ansprüche 7-10,
**dadurch gekennzeichnet, dass** jede Fahrwerkseinheit (32, 34) einen in der Maschinen-Längsrichtung (L) sich erstreckenden Bodenbearbeitungsmaschinen-Aufstandsflächenbereich (A) aufweist, und dass die Walzendrehachse (D) in der Maschinen-Längsrichtung (L) zwischen einem ersten Aufstandsflächenbereich-Längsende (52) und einem zweiten Aufstandsflächenbereich-Längsende (54) positioniert ist.

12. Bodenbearbeitungsmaschine nach einem der Ansprüche 7-11,
**dadurch gekennzeichnet, dass** jede Fahrwerkseinheit (32, 34) ein Raupenfahrwerk (36, 38) umfasst.

13. Bodenbearbeitungsmaschine nach Anspruch 10 und Anspruch 12,
**dadurch gekennzeichnet, dass** das Raupenfahrwerk (36, 38) an den Fahrwerksträger (40) im Wesentlichen frei schwenkbar angekoppelt ist.

14. Bodenbearbeitungsmaschine nach einem der vorangehenden Ansprüche,
**dadurch gekennzeichnet, dass** die Bodenbearbeitungsmaschine (12) zum Bewegen in der Maschinen-Längsrichtung (L) vermittels der Kopplungsanordnung (56) an eine Zugmaschine (14) ankoppelbar ist.

15. Bodenbearbeitungsmaschine nach Anspruch 14,
**dadurch gekennzeichnet, dass** die Kopplungsanordnung (56) eine mit dem Maschinenrahmen (16) vorzugsweise starr verbundene Deichseleinheit (58) mit einer Kopplungsformation, vorzugsweise Kopplungspfanne, zur Ankopplung an eine an der Zugmaschine (14) vorgesehene Gegen-Kopplungsformation, vorzugsweise Kopplungskugel, umfasst.

16. Bodenbearbeitungsmaschine nach einem der Ansprüche 1-13,
**dadurch gekennzeichnet, dass** an dem einen Hinterwagen (80) der Bodenbearbeitungsmaschine (12') bereitstellenden weiteren Maschinenrahmen (82) ein Antriebsaggregat vorgesehen ist, und dass die Kopplungsanordnung (56) eine Lenk-Gelenksanordnung (84) zur schwenkbaren Kopplung des einen Vorderwagens (78) der Bodenbearbeitungsmaschine (12') bereitstellenden Maschinenrahmens (16) mit dem weiteren Maschinenrahmen (82) um eine Lenk-Schwenkachse (A) umfasst.

17. Bodenbearbeitungszug, umfassend eine Zugmaschine (14) und eine an die Zugmaschine (14) angekoppelte Bodenbearbeitungsmaschine (12) nach einem der Ansprüche 1-15.

18. Verfahren zur Demontage einer Bodenbearbeitungswalze von einer Bodenbearbeitungsmaschine nach einem der Ansprüche 1-16, umfassend die Maßnahmen:
a) Positionieren der Hub/Stütz-Anordnung (31) derart, dass der Maschinenrahmen (16) bei auf einem Boden aufstehender Bodenbearbeitungswalze (26) durch die Hub/Stütz-Anordnung (31) bezüglich des Bodens gestützt ist,
b) nach Durchführung der Maßnahme a), Loslösen der Bodenbearbeitungswalze (26) von den Längsträgern (18, 20);
c) vor oder nach Durchführung der Maßnahme b), Verschwenken des einen der Querträger (22, 24) in eine Walzen-Montagestellung,
d) nach Durchführung der Maßnahmen b) und c), Bewegen des Maschinenrahmens (16) bezüglich der Bodenbearbeitungswalze (26) im Wesentlichen in der Maschinenrahmen-Längsrichtung (L).

19. Verfahren nach Anspruch 18, **dadurch gekennzeichnet, dass** vor Durchführung der Maßnahme d) der Maschinenrahmen (16) vermittels der Hub/Stütz-Anordnung (31) derart angehoben wird, dass bei Durchführung der Maßnahme d) der Maschinenrahmen (16) mit in die Walzen-Montagestellung verschwenktem Querträger (24) über die Bodenbearbeitungswalze (26) hinweg bewegbar ist.

## Claims

1. Soil-processing machine, comprising:
- a machine frame (16) with two longitudinal beams (18, 20) arranged mutually spaced transverse to a longitudinal direction (L) of the machine, essentially extending in the longitudinal direction (L) of the machine and two transverse beams (22, 24) arranged mutually spaced in the longitudinal direction (L) of the machine, essentially extending transverse to the longitudinal direction (L) of the machine,
- a soil-processing roller (26) supported on the longitudinal beams (18, 20) so that it can rotate about an axis of rotation (D) of the roller in a longitudinal direction (L) of the machine between the transverse beams (22, 24),
- a coupling arrangement (56) for coupling the machine frame (16) to a further machine frame (82) of the soil-processing machine (12') or to a further machine (14),
- a lifting/supporting arrangement (31) provided on the machine frame (16) for raising and/or supporting the machine frame (16) in relation to the ground,
**characterized in that** one of the transverse beams (22, 24) is supported on both longitudinal beams (18, 20) so that it can swivel about a swivel axis (S) that is essentially parallel to the axis of rotation (D) of the roller into a position not inhibiting a movement of the soil-processing roller (26) away from the machine frame (16) and towards the machine frame (16) with the machine frame (16) being supported by the lifting/supporting arrangement (31) in relation to the ground.

2. Soil-processing machine according to claim 1,
**characterised in that** the one of the transverse beams (22, 24) is supported such that it can swivel at the longitudinal beams (18, 20) in an upper region of the latter in a height direction (H).

3. Soil-processing machine according to claim 1 or 2,
**characterised in that** the one of the transverse beams (22, 24) is allocated to a swivel drive (72) driving the same to swivel about the swivel axis (S).

4. Soil-processing machine according to claim 3,
**characterised in that** the swivel drive (72) comprises at least one piston/cylinder unit (74, 76), preferably one associated to each longitudinal beam (18, 20), supported in relation to the one transverse beam (24) and to one of the longitudinal beams (18, 20).

5. Soil-processing machine according to claim 3 or 4,
**characterised in that** the one of the transverse beams (22, 24) can be swivelled by the swivel drive (72) between a roller operational position and a roller installation position, wherein in the roller operational position one of the transverse beams (22, 24) is connected or connectable rigidly with the longitudinal beams (18, 20) and so that is immobile in relation to them and is swivelled upwards in the roller installation position in relation to its position in the roller operational position in a height direction (H).

6. Soil-processing machine according to any one of the preceding claims,
**characterised in that** the lifting/supporting arrangement (31) comprises a chassis arrangement (30) with at least one chassis unit (32, 34) supported on the machine frame (16) so that it is height adjustable.

7. Soil-processing machine according to claim 6,
**characterised in that** the chassis arrangement (30) comprises a chassis unit (32, 34) allocated to each longitudinal beam (18, 20), supported on the longitudinal beam (18, 20) so that it is height adjustable, preferably wherein each chassis unit (32, 34) is supported on the allocated longitudinal beam (18, 20) so that it is height adjustable independently of the other chassis unit (32, 34).

8. Soil-processing machine according to claim 7,
**characterised in that** each chassis unit (32, 34) is connected in a connection region (44) to the allocated longitudinal beam (18, 20) so that it can swivel and is supported by a height adjustment arrangement (48) so that it is height adjustable in a height adjustment region (46) in relation to the allocated longitudinal beam (18, 20) arranged spaced in relation to the connection region (44) in the longitudinal direction (L) of the machine.

9. Soil-processing machine according to claim 8,
**characterised in that** the height adjustment arrangement (48) comprises a piston/cylinder unit or a spindle unit.

10. Soil-processing machine according to claim 8 or 9,
**characterised in that** each chassis unit (32, 34) comprises a chassis support (40) attached in the connection region (44) to the longitudinal beam (18, 20) such that it can swivel and connected to the height adjustment arrangement (48) in the height adjustment region (46).

11. Soil-processing machine according to any one of claims 7-10,
**characterised in that** each chassis unit (32, 34) comprises a soil-processing machine support surface region (A) extending in the longitudinal direction (L) of the machine and that the axis of rotation (D) of the roller is positioned in the longitudinal direction of the machine (L) between a first longitudinal end of the support surface region (52) and a second longitudinal end of the support surface region (54).

12. Soil-processing machine according to any one of claims 7-11,
**characterised in that** each chassis unit (32, 34) comprises a track chassis (36, 38).

13. Soil-processing machine according to claim 10 and claim 12,
**characterised in that** the track chassis (36, 38) is connected to the chassis beam (40) essentially freely able to swivel.

14. Soil-processing machine according to any one of the preceding claims,
**characterised in that** the soil-processing machine (12) can be attached to a tractor (14) for moving in the longitudinal direction (L) of the machine by means of the coupling arrangement (56).

15. Soil-processing machine according to claim 14,
**characterised in that** the coupling arrangement (56) comprises a drawbar unit (58) preferably rigidly connected to the machine frame (16) with a coupling formation, preferably coupling socket, for attaching to a counter-coupling formation provided for a tractor (14), preferably a trailer ball.

16. Soil-processing machine according to any one of claims 1-13,
**characterised in that** on the further machine frame (82) providing a rear end (80) of the soil-processing machine (12') a drive unit is provided and that the coupling arrangement (56) comprises a steering linkage arrangement (84) for coupling the machine frame (16) providing a front end (78) of the soil-processing machine (12') to the further machine frame (82) so that it can swivel about a steering linkage axis (A).

17. Soil-processing train comprising a tractor (14) and a soil-processing machine (12) according to any one of claims 1-15 coupled to the tractor (14).

18. Process for removing a soil-processing roller from a soil-processing machine according to any one of claims 1-16, comprising the measures:
a) Positioning the lifting/supporting arrangement (31) in such a way that the machine frame (16) is supported with the soil-processing roller (26) supported on a floor by the lifting/supporting arrangement (31) in relation to the floor,
b) After undertaking the measure a), releasing the soil-processing roller (26) from the longitudinal beams (18, 20);
c) Before or after undertaking measure b), swivelling one of the transverse beams (22, 24) in a roller-installation position,
d) After undertaking measures b) and c), moving the machine frame (16) in relation to the soil-processing roller (26) essentially in the longitudinal direction (L) of the machine frame.

19. Process according to claim 18, **characterised in that** before undertaking the measure d), the machine frame (16) may be raised by means of the lifting/supporting arrangement (31) in such a way that when undertaking measure d) the machine frame (16) can be moved away over the soil-processing roller (26) with the transverse beam (24) swivelled into the roller installation position.

## Revendications

1. Machine de traitement du sol, comprenant :
- un châssis de machine (16) avec deux supports longitudinaux (18, 20) disposées de façon mutuellement espacée transversalement à une direction longitudinale (L) de la machine, s'étendant essentiellement dans la direction longitudinale (L) de la machine et deux supports transversaux (22, 24) disposés de façon mutuellement espacée dans la direction longitudinale (L) de la machine, s'étendant essentiellement transversalement à la direction longitudinale (L) de la machine,
- un rouleau de traitement du sol (26) supporté sur les supports longitudinaux (18, 20) de manière à pouvoir tourner autour d'un axe de rotation (D) du rouleau dans la direction longitudinale (L) de la machine entre les supports transversaux (22, 24),
- un dispositif d'accouplement (56) pour accoupler le châssis de machine (16) à un autre châssis de machine (82) de la machine de traitement du sol (12') ou à une autre machine (14),
- un dispositif de levage/support (31) prévu sur le châssis de machine (16) pour lever et/ou supporter le châssis de machine (16) par rapport au sol,
**caractérisé en ce qu'**un des supports transversaux (22, 24) est supporté sur les deux supports longitudinaux (18, 20) de sorte qu'elle peut pivoter autour d'un axe de pivotement (S) qui est essentiellement parallèle à l'axe de rotation de rouleau (D) dans une position n'empêchant pas un mouvement du rouleau de traitement du sol (26) loin du châssis de machine (16) et vers le châssis de machine (16) avec le châssis de machine (16) étant supporté par le dispositif de levage/support (31) par rapport au sol.

2. Machine de traitement du sol selon la revendication 1,
**caractérisée en ce que** ledit un des supports transversaux (22, 24) est supporté) sur les supports longitudinaux (18, 20) de manière à pouvoir pivoter dans une région supérieure de ce dernier dans la direction de hauteur (H.

3. Machine de traitement du sol selon la revendication 1 ou 2,
**caractérisée en ce que** ledit un des supports transversaux (22, 24) est associé à un entraînement de pivotement (72) qui l'entraîne à pivoter autour de l'axe de pivotement (S).

4. Machine de traitement du sol selon la revendication 3,
**caractérisée en ce que** l'entraînement de pivotement (72) comprend au moins une unité piston/cylindre (74, 76), de préférence une associée à chaque support longitudinal (18, 20), supporté par rapport audit un support transversal (24) et à un des supports longitudinaux (18, 20).

5. Machine de traitement du sol selon la revendication 3 ou 4,
**caractérisée en ce que** ledit un des supports transversaux (22, 24) peut être pivoté par l'entraînement de pivotement (72) entre une position de fonctionnement du rouleau et une position de montage du rouleau, dans lequel dans la position de fonctionnement du rouleau un des supports transversaux (22, 24) est relié ou peut être relié de manière rigide aux supports longitudinaux (18, 20) et est ainsi immobile par rapport à ceux-ci et est pivoté vers le haut dans la position de montage du rouleau par rapport à sa position dans la position de fonctionnement du rouleau dans le sens de la hauteur (H).

6. Machine de traitement du sol selon l'une quelconque des revendications précédentes,
**caractérisée en ce que** le dispositif de levage/support (31) comprend un dispositif de châssis (30) avec au moins une unité de châssis (32, 34) supportée sur le châssis de machine (16) de manière à être réglable en hauteur.

7. Machine de traitement du sol selon la revendication 6,
**caractérisée en ce que** l'agencement de châssis (30) comprend une unité de châssis (32, 34) attribuée à chaque support longitudinal (18, 20), supportée sur le support longitudinal (18, 20) de manière à être réglable en hauteur, de préférence dans lequel chaque unité de châssis (32, 34) est supportée sur le support longitudinal (18, 20) associé de manière à être réglable en hauteur indépendamment de l'autre unité de châssis (32, 34).

8. Machine de traitement du sol selon la revendication 7,
**caractérisée en ce que** chaque unité de châssis (32, 34) est reliée de manière pivotante dans une zone d'accouplement (44) au support longitudinal (18, 20) associée et est supportée par un dispositif de réglage en hauteur (48) de manière à être réglable en hauteur dans une zone de réglage en hauteur (46) par rapport au support longitudinal (18, 20) associé, disposé à distance de la zone d'accouplement (44) dans la direction longitudinale (L) de la machine.

9. Machine de traitement du sol selon la revendication 8,
**caractérisée en ce que** le dispositif de réglage en hauteur (48) comprend une unité de piston/cylindre ou une unité de broche.

10. Machine de traitement du sol selon la revendication 8 ou 9,
**caractérisée en ce que** chaque unité de châssis (32, 34) comprend un support de châssis (40) fixé dans la zone d'accouplement (44) au support longitudinal (18, 20) de manière à pouvoir pivoter et accouplé au dispositif de réglage en hauteur (48) dans la zone de réglage en hauteur (46).

11. Machine de traitement du sol selon l'une quelconque des revendications 7 à 10,
**caractérisée en ce que** chaque unité de châssis (32, 34) présente une zone de surface de support de machine de traitement du sol (A) s'étendant dans la direction longitudinale (L) de la machine et **en ce que** l'axe de rotation (D) du rouleau est positionné dans la direction longitudinale (L) de la machine entre une première extrémité longitudinale de la zone de surface de support (52) et une deuxième extrémité longitudinale de la zone de surface de support (54).

12. Machine de traitement du sol selon l'une quelconque des revendications 7 à 11,
**caractérisée en ce que** chaque unité de châssis (32, 34) comprend un châssis à chenilles (36, 38).

13. Machine de traitement du sol selon la revendication 10 et la revendication 12,
**caractérisée en ce que** le châssis à chenilles (36, 38) est relié au support de châssis (40) essentiellement librement pivotante.

14. Machine de traitement du sol selon l'une quelconque des revendications précédentes,
**caractérisée en ce que** la machine de traitement du sol (12) peut être accouplée à un tracteur (14) au moyen du dispositif d'accouplement (56) pour se déplacer dans la direction longitudinale (L) de la machine.

15. Machine de traitement du sol selon la revendication 14,
**caractérisée en ce que** le dispositif d'accouplement (56) comprend une unité de barre d'attelage (58) de préférence reliée de manière rigide au châssis de machine (16) avec une formation d'accouplement, de préférence une douille d'accouplement, pour l'accouplement à une formation de contre-accouplement prévue au tracteur (14), de préférence une boule de remorque.

16. Machine de traitement du sol selon l'une quelconque des revendications 1 à 13,
**caractérisée en ce qu'**une unité d'entraînement est prévue sur l'autre châssis de machine (82) prévoyant une extrémité arrière (80) de la machine de traitement du sol (12') et **en ce que** le dispositif d'accouplement (56) comprend un dispositif de tringlerie de direction (84) pour l'accouplement pivotable autour d'un axe de tringlerie de direction (A) du châssis de machine (16) prévoyant une extrémité avant (78) de la machine de traitement du sol (12') à l'autre châssis de machine (82).

17. Train de traitement du sol comprenant un tracteur (14) et une machine de traitement du sol (12) selon l'une quelconque des revendications 1 à 15 accouplée au tracteur (14).

18. Procédé de démontage d'un rouleau de traitement du sol d'une machine de traitement du sol selon l'une quelconque des revendications 1 à 16, comprenant les mesures suivantes :
a) positionner le dispositif de levage/support (31) de manière à ce que le châssis de machine (16) soit soutenu avec le rouleau de traitement du sol (26) soutenu sur un sol par le dispositif de levage/support (31) par rapport au sol,
b) après avoir effectué la mesure a), libérer le rouleau de traitement du sol (26) des supports longitudinaux (18, 20) ;
c) avant ou après la mesure b), faire pivoter l'un des supports transversaux (22, 24) dans une position d'installation du rouleau,
d) après avoir réalisé les mesures b) et c), déplacer le châssis de machine (16) par rapport au rouleau de traitement du sol (26) essentiellement dans la direction longitudinale (L) du châssis de la machine.

19. Procédé selon la revendication 18, **caractérisé en ce qu'**avant d'entreprendre la mesure d), le châssis de machine (16) peut être soulevé au moyen du dispositif de levage/support (31) de telle sorte que lors de l'exécution de la mesure d), le châssis de machine (16) peut être déplacé au-dessus du rouleau de traitement du sol (26) avec le support transversal (24) pivoté dans la position d'installation du rouleau.
